# EUROPEAN PATENT APPLICATION

(11) **EP 2 806 362 A1**
(43) Date of publication of application: **26.11.2014**
(21) Application number: 14166167.8
(22) Date of filing: 28.04.2014
(51) Int. Cl.: G06F 11/10, G06F 12/02

(54) **Information processing device, control circuit, computer-readable recording medium for control program, and control method**

(30) Priority: 24.05.2013 JP 2013110400
(71) Applicant: FUJITSU LIMITED, Kawasaki-shi, Kanagawa 211-8588 (JP)
(72) Inventor: Higeta, Masanori, Kanagawa, 211-8588 (JP); Hayasaka, Kazumi, Kanagawa, 211-8588 (JP)
(74) Representative: Hoffmann Eitle

(57) **Abstract**

An information processing device includes: a storage device that has a plurality of storage areas; a detection unit that carries out error detection from read data out of the storage area belonging to the storage device; a readout unit that, in a case that the detection unit detects an error, identifies an area where error occurrence is estimated including a storage area in which the data where the error is detected is written and carries out readout of data individually from each storage area in the identified area; and a movement unit that, in a case of detecting an error from the data read out by the readout unit, moves the data to another storage area.

## Description

### FIELD

The embodiments discussed herein are related to an information processing device, a control circuit, a control program, and a control method.

### BACKGROUND

In the past, there used to be information processing devices using a non-volatile memory that operates faster than magnetic disks. As one example of such information processing system, there are information processing devices that use an NAND flash memory device as a storage device, such as storage. In the descriptions below, an NAND flash memory device is described as an NAND device.

Here, there is a case in an NAND device that, when information is remained to be written therein, electrical charge is lost from the element in the storage area in which the information is written to produce bit corruption. In addition, there is a case in an NAND device that a voltage is applied to the element in the storage area when information is read out, thereby producing bit corruption in the information stored in an adjacent storage area.

In order to avoid error occurrence due to such bit corruption, an NAND device stores an error correction code that carries out error detection from the information stored in each storage area and error correction. Then, an NAND controller that carries out control of an NAND device executes error detection and correction from the information read out of the NAND device using the error correction code.

In elements in each storage area belonging to an NAND device, degradation progresses while written information is deleted to reduce the ability to retain information, and as a result, it is prone to produce an error. For example, in an NAND device that executes readout of information in physical page, which is an information storage area, and executes writing and deletion of information in physical block including a plurality of physical pages, element degradation progresses in physical block and it becomes prone to produce an error.

There are NAND controllers that avoid error expansion by excluding such physical block with a degraded element from information writing targets. For example, in a case of detecting an error from read information, an NAND controller specifies a physical block including a physical page in which information with the detected error is stored. Then, the NAND controller moves information in the specified physical block to another physical block to exclude the specified physical block from information storage targets.

Related techniques are disclosed in Japanese Laid-open Patent Publication Nos. 2007-316779 and 06-208799.

However, the technique to move information in the above described physical block where an error is detected to another physical block also migrates information with no error occurred to the other physical block.

Therefore, as a result of producing excessive readout process and writing process, there are problems of increasing the element degradation and the time period for moving the data and deteriorating the performances of the NAND device.

### SUMMARY

The embodiment provides an information processing device, a control circuit, a control program, and a control method that inhibit deterioration in the performances associated with the movement of the information with the detected error.

According to an aspect of the invention, an information processing device includes: a storage device that has a plurality of storage areas; a detection unit that carries out error detection from read data out of the storage area belonging to the storage device; a readout unit that, in a case that the detection unit detects an error, identifies an area where error occurrence is estimated including a storage area in which the data where the error is detected is written and carries out readout of data individually from each storage area in the identified area; and a movement unit that, in a case of detecting an error from the data read out by the readout unit, moves the data to another storage area.

### BRIEF DESCRIPTION OF DRAWINGS

FIG. 1 illustrates an information processing device according to a first embodiment;
FIG. 2 illustrates one example of memory access;
FIG. 3 illustrates one example of process executed by an NAND controller;
FIG. 4 illustrates a functional configuration of an NAND controller according to the first embodiment;
FIG. 5 illustrates one example of information stored in an address conversion table according to the first embodiment;
FIG. 6 illustrates one example of information stored in a management information table according to the first embodiment;
FIG. 7 illustrates one example of a functional configuration of an error log storage unit;
FIG. 8 illustrates process executed by an NAND controller;
FIG. 9 is a flowchart illustrating a flow of process executed by an NAND controller according to the first embodiment;
FIG. 10 illustrates a functional configuration of an NAND controller according to a second embodiment;
FIG. 11 is a flowchart illustrating a flow of process executed by an NAND controller according to the second embodiment;
FIG. 12 illustrates a functional configuration of an NAND controller according to a third embodiment;
FIG. 13 is a flowchart illustrating a flow of process executed by an NAND controller according to the third embodiment;
FIG. 14 illustrates a variation of an error log storage unit;
FIG. 15 illustrates one example of a management information table including an error log; and
FIG. 16 illustrates one example of an NAND controller that executes a control program.

### DESCRIPTION OF EMBODIMENTS

With reference to the attached drawings, detailed descriptions are given below to embodiments of an information processing device, a control circuit, a control program, and a control method according to embodiments of the present disclosure based on the drawings. The embodiments below do not limit the disclosed technique. Each embodiment may be combined appropriately as long as there is no contradiction.

### [First embodiment]

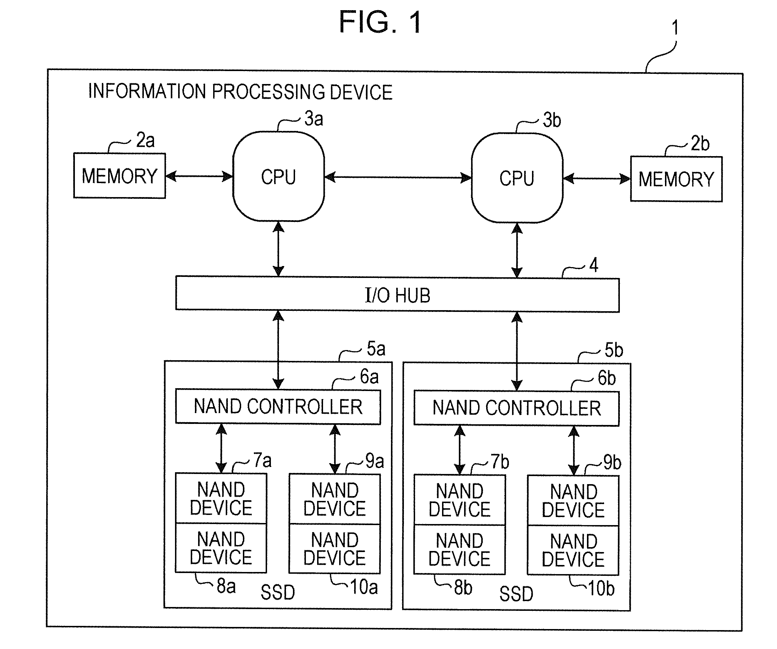

In the following first embodiment, descriptions are given to one example of an information processing device according to an embodiment of the present disclosure using FIG. 1. FIG. 1 illustrates an information processing device according to the first embodiment. In the example illustrated in FIG. 1, an information processing device 1 has a plurality of memories 2a and 2b, a plurality of central processing units (CPUs) 3a and 3b, an input/output (I/O) hub 4, and a plurality of solid state drives (SSDs) 5a and 5b. SSD 5a also has an NAND controller 6a and a plurality of NAND devices 7a through 10a.

The SSD 5b also has an NAND controller 6b and a plurality of NAND devices 7b through 10b. In the descriptions below, descriptions are omitted for the NAND controller 6b and the plurality of NAND devices 7b through 10b because they exhibit functions similar to the NAND controller 6a and the plurality of NAND devices 7a through 10a.

Each of the memories 2a and 2b is a storage device that stores data used for arithmetic processing by the respective CPUs 3a and 3b. Each of the CPUs 3a and 3b is an arithmetic processing unit that carries out various types of arithmetic processing using data stored by the memories 2a and 2b. For example, the CPUs 3a and 3b obtain data stored by the memories 2a and 2b using the technique of non-uniform memory access (NUMA) to execute arithmetic processing using the data thus obtained.

The CPUs 3a and 3b also obtain data stored by the respective SSDs 5a and 5b via the I/O hub 4 to execute arithmetic processing using the data thus obtained. In detail, the CPU 3a issues a request of reading out or writing data to the SSD 5a to carry out readout or writing of data from the respective NAND devices 7a through 10a. For example, the CPU 3a issues a readout request in which a logical address specifying data subject to the readout is stored to the SSD 5a. The CPU 3a also issues a writing request in which a logical address specifying a data writing destination and data subject to the writing are stored.

The NAND device 7a is a non-volatile memory that stores various types of data. In detail, the NAND device 7a has a plurality of physical pages, which are a data storage area, and carries out writing of data in physical page. The NAND device 7a also has a plurality of physical blocks having a plurality of physical pages and carries out deletion of data in block. Here, one physical page has a storage capacity of, for example, 8 kilobytes and one physical block has, for example, 128 physical pages.

The NAND controller 6a accesses each of the NAND devices 7a through 10a to carry out readout and writing of data. For example, the NAND controller 6a has an address conversion table that associates a logical address used when each of the CPUs 3a and 3b specifies a storage area in which data is stored with a physical address indicating a storage area of the NAND devices 7a through 10a in which the data is stored.

Then, when receiving a logical address together with a readout request, the NAND controller 6a identifies a physical address that is associated with the logical address using the address conversion table and carries out readout of data from the storage area indicated by identified physical address. After that, the NAND controller 6a sends the read data to the CPU 3a via the I/O hub 4.

In the descriptions below, for ease of understanding, a logical address to be the starting address of each physical page is described simply as a logical address, and a physical address to be the starting address of each physical page is described simply as a physical address. In addition, the system to be executed by the information processing device 1 is assumed to issue a readout request and a writing request to a logical address to be the starting address of each physical page.

For example, in a case that the NAND devices 7a through 10a have a plurality of blocks and each block contains 2^{q} physical pages, the NAND controller 6a carries out the following process. Firstly, the NAND controller 6a defines lower q bits of a logical address as a logical page number in order to identify a virtual page with a size equivalent to the physical page in one logical block and defines upper p bits of the rest of the logical address as a logical block address indicating one logical block.

The NAND controller 6a also defines the upper p bits of the physical address as a physical block address indicating one physical block and defines the lower q bits of the physical address as a physical page number in order to identify each physical page in one physical block. That is, the NAND controller 6a divides a logical address into a logical block address indicating a logical block and a logical page number indicating logical pages per logical block. The NAND controller 6a also divides a physical address into a physical block address indicating a physical block and a physical page number indicating physical pages per physical block.

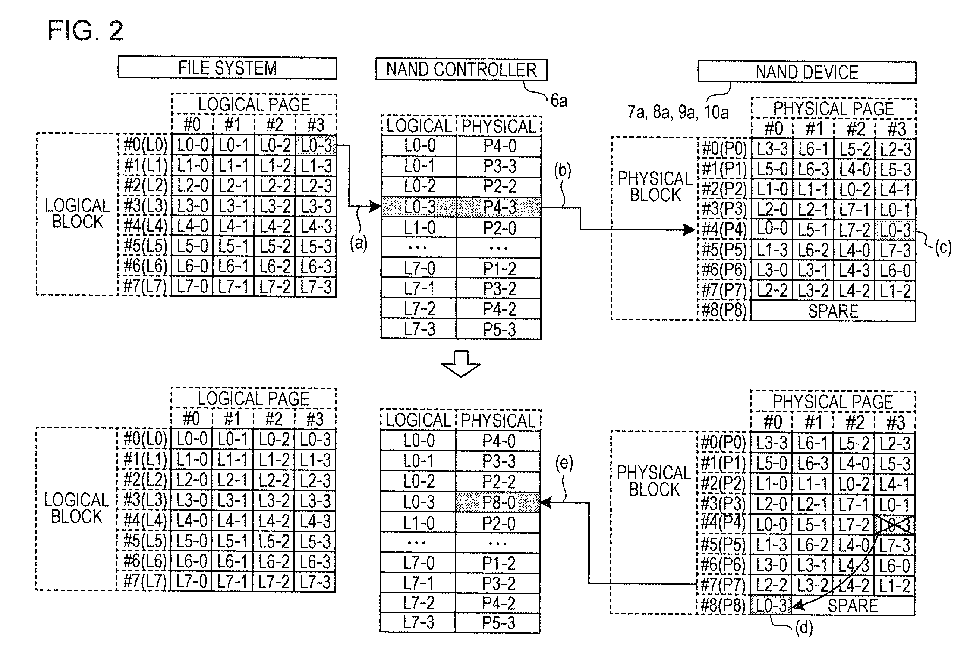

Descriptions are given below to one example of memory access executed by the NAND controller 6a using FIG. 2. FIG. 2 illustrates one example of memory access. In the example illustrated in FIG. 2, for ease of understanding, the NAND device 7a is described where a number of blocks is defined as "8" and a number of physical pages in each block is "4". In the example illustrated in FIG. 2, process in which the NAND controller 6a carries out writing of data in physical page belonging to the NAND devices 7a through 10a using the address conversion table associating logical block addresses with physical block addresses is described.

For example, as illustrated in (a) in FIG. 2, the NAND controller 6a issues a writing request from a file system executed by the CPU 3a to a logical page number "3" of a logical block address "L0", in other words, to a logical address "L0-3". Upon this, the NAND controller 6a obtains a physical address "P4-3" that is associated with the logical address "L0-3" using the address conversion table, and as illustrated in (b) in FIG. 2, identifies a physical page in which update source data is stored.

Subsequently, as illustrated in (c) in FIG. 2, the NAND controller 6a reads out data of the physical page indicated by the physical address "P4-3", updates the read data to data subject to writing, and stores the data after the update in a blank physical page of a spare block. As a detailed example, as illustrated in (d) in FIG. 2, the NAND controller 6a stores the data after the update in a physical page indicated by the physical address "P8-0". After that, as illustrated in (e) in FIG. 2, the NAND controller 6a updates the physical address "P4-3" that is associated with the logical address "L0-3" into "P8-0" to terminate the process.

In order to level variation in degradation rate and avoid bit corruption produced by that electrical charge is lost from an element, the NAND controller 6a also stores a clock time when data is written in each block of the NAND device as a time stamp. Then, for each block, the NAND controller 6a moves the data stored in the block to another block in a case that a difference between the stored time stamp and a current clock time is greater than a predetermined threshold.

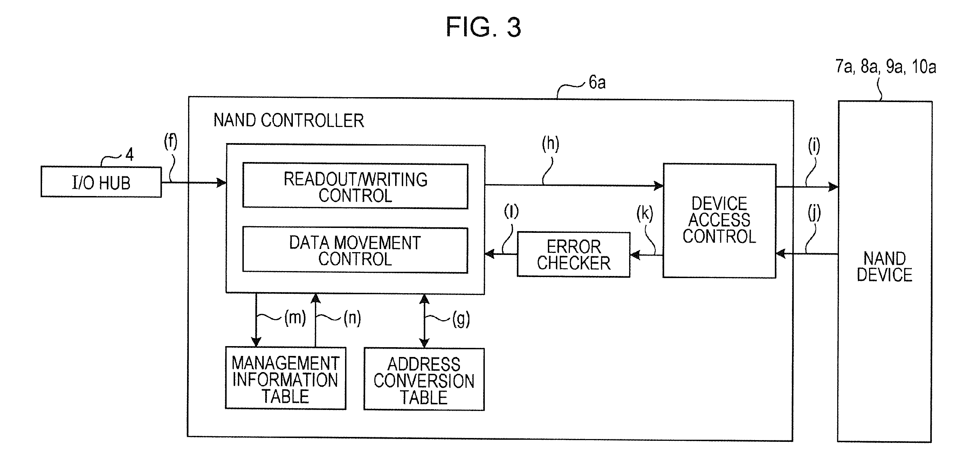

Descriptions are given below to one example of process executed by the NAND controller 6a using FIG. 3. FIG. 3 illustrates one example of process executed by an NAND controller. In the example illustrated in FIG. 3, the NAND controller 6a is assumed to have an address conversion table that associates logical addresses with physical addresses. In addition, in the example illustrated in FIG. 3, the management information table is assumed to have a management information table that manages a time stamp indicating a clock time when data is written in each physical block and page validity indicating whether or not data of each physical page contained in in each physical block is valid.

Firstly, readout/writing control executed by the NAND controller 6a is described. For example, as illustrated in (f) in FIG. 3, the NAND controller 6a receives a readout request from the I/O hub 4. Upon this, the NAND controller 6a executes readout/writing control. As illustrated in (g) in FIG. 3, the NAND controller 6a firstly converts a logical address to a physical address using the address conversion table.

Then, as illustrated in (h) in FIG. 3, the NAND controller 6a executes device access control using the physical address after the conversion. In detail, as illustrated in (i) in FIG. 3, the NAND controller 6a carries out readout of data from the storage area indicated by the physical address after the conversion. As a result, as illustrated in (j) in FIG. 3, the NAND controller 6a obtains data subject to readout and an error check and correction (ECC) bit to detect an error from the data subject to the readout.

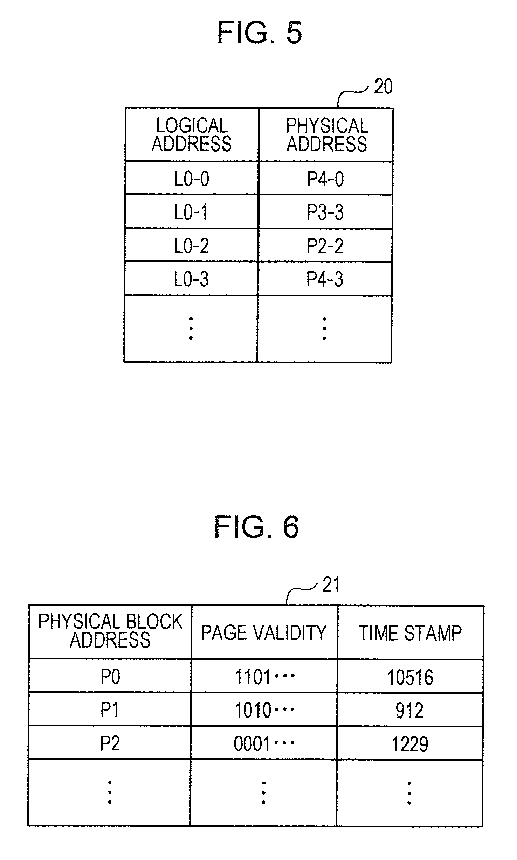

As illustrated in (k) in FIG. 3, the NAND controller 6a also executes error detection and correction from the data subject to the readout using the ECC bit thus obtained. Then, as illustrated in (I) in FIG. 6, the NAND controller 6a obtains data finished with the error detection and correction to output the data to the I/O hub 4.

The NAND controller 6a also receives a writing request from the I/O hub 4. Upon this, as illustrated in (m) in FIG. 3, the NAND controller 6a stores a physical block address in a physical block including the physical page subject to writing of data in association with a time stamp indicating the current clock time in the management information table. Then, the NAND controller 6a carries out writing of data in the NAND devices 7a through 10a.

Next, data movement control executed by the NAND controller 6a is described. For example, the NAND controller 6a executes an instruction of an application program and wear leveling process below at predetermined time intervals. In detail, as illustrated in (n) in FIG. 6, the NAND controller 6a obtains a physical block address of a physical block after a predetermined time lapse since writing of data is carried out lastly. Then, the NAND controller 6a moves data stored in each physical page of a physical block indicated by the physical block address thus obtained to a spare block, which is a physical block in which no valid data is stored.

The NAND controller 6a also executes garbage collection process below. In detail, as illustrated in (n) in FIG. 6, the NAND controller 6a specifies a physical block that satisfies predetermined conditions, for example, a physical block that has valid data items less than a threshold out of the data items stored therein with reference to the management information table. Then, the NAND controller 6a moves valid data stored in the specified physical block to a spare block. After that, the NAND controller 6a deletes each data item in the specified physical block to define the block as a spare block available for data writing.

Here, when degradation proceeds, the elements of the NAND devices 7a through 10a become difficult to appropriately retain electrical charge. The NAND devices 7a through 10a also carry out deletion of data in physical block. Therefore, in a case that data is written in a physical block that contains a degradation proceeded element, there is a case that the elements of the NAND devices 7a through 10a produce bit corruption in the written data.

With that, in a case of detecting an error from data subject to the readout, a NAND device in the past specifies a physical block including a physical page in which the data subject to readout is stored and moves all valid data stored in the specified physical block to a spare block. Then, the NAND device excludes the specified physical block from the targets for writing of data not to use it and adds a physical block for substitution prepared in advance to the targets for writing of data.

However, in the technique to move all valid data stored in a physical block including a physical page in which the data with the detected error is stored to another physical block, excessive readout process and writing process are executed to the NAND devices 7a through 10a. In particular, data writing process to the NAND devices 7a through 10a takes some time.

In such a manner, while data movement is carried out, execution of regular readout process and writing process to the NAND devices 7a through 10a is blocked, so that an NAND controller in the past has a problem of deteriorating performances of the NAND devices 7a through 10a. The NAND controller in the past also executes excessive writing process to the NAND devices 7a through 10a, so that the elements of the NAND devices 7a through 10a are degraded, and as a result, the lives of the NAND devices 7a through 10a turn out to be deteriorated.

In a case that a probability of producing an error in the entire physical block including a physical page in which the error is detected is estimated and the probability thus estimated is lower than a predetermined threshold, an approach is considered to reduce a time period for data movement by not carrying out the data movement. However, it is difficult to achieve such process with hardware.

With that, the NAND controller 6a executes the following process. Firstly, in a case of detecting an error from read out data, the NAND controller 6a identifies an area that is a predetermined area including a physical page in which the read data is stored and also where error occurrence is estimated. For example, the NAND controller 6a identifies a physical block including a physical page in which the read data is stored.

The NAND controller 6a also executes readout of data individually from each physical page contained in the identified area. In the descriptions below, the process to carry out readout of data individually from each physical page contained in the area where error occurrence is estimated is described as test readout. Then, in a case of detecting an error from data read out by test readout, the NAND controller 6a moves the data in a physical page subject to test readout to another physical page.

In other words, in a case that an error is detected from the read data, the NAND controller 6a executes test readout of data individually from each physical page contained in the area where the error occurrence is estimated. Then, as a result of the test readout, the NAND controller 6a moves only the data in the physical page where the error is detected to another physical page. Therefore, the NAND controller 6a is capable of reducing excessive readout and writing process of data, so that it is possible to avoid deterioration of the performances and the lives of the NAND devices 7a through 10a.

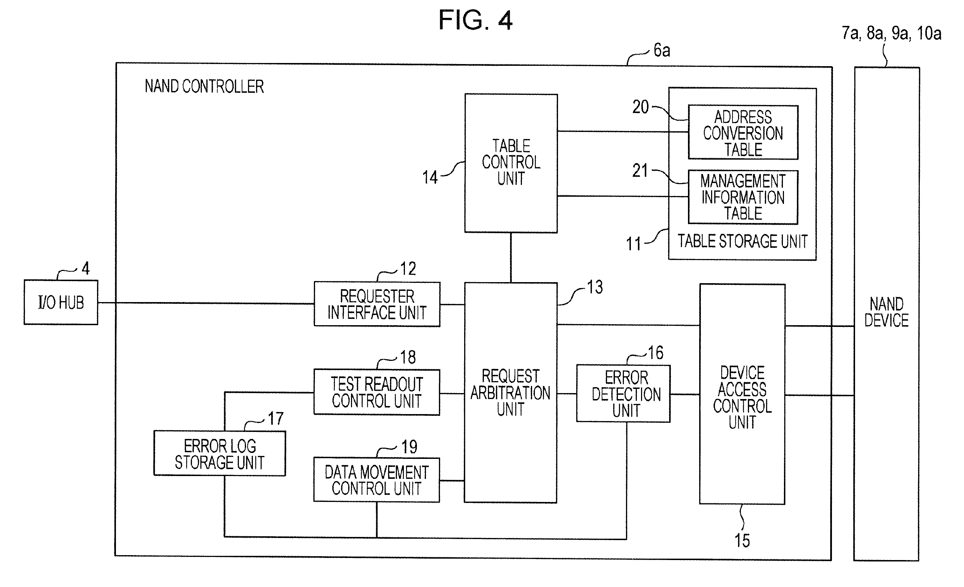

Next, using FIG. 4, descriptions are given to one example of a functional configuration belonging to the NAND controller 6a. In the descriptions below, out of the functions belonging to the NAND controller 6a, a flow of process that conducts test readout individually to a physical page contained in the area where error occurrence is estimated to move the data in the physical page where the error is detected to another physical page is described.

FIG. 4 illustrates a functional configuration of an NAND controller according to the first embodiment. In the example illustrated in FIG. 4, the NAND controller 6a has a table storage unit 11, a requester interface unit 12, a request arbitration unit 13, a table control unit 14, and a device access control unit 15. The NAND controller 6a also has an error detection unit 16, an error log storage unit 17, a test readout control unit 18, and a data movement control unit 19. The table storage unit 11 stores an address conversion table 20 and a management information table 21.

Firstly, using FIG. 5 and FIG. 6, descriptions are given to information stored in the address conversion table 20 and the management information table 21 stored by the table storage unit 11. FIG. 5 illustrates one example of information stored in an address conversion table according to the first embodiment. As illustrated FIG. 5, in the address conversion table 20, a logical address and a physical address are stored in association.

For example, in the example illustrated in FIG. 5, in the address conversion table 20, a logical address "L0-0" and a physical address "P4-0" are stored in association. In other words, the address conversion table 20 indicates that data specified by the logical address "L0-0" is stored in a physical page indicated by the physical address "P4-0".

Similarly, in the example illustrated in FIG. 5, in the address conversion table 20, a logical address "L0-1" and a physical address "P3-3" are stored in association, and a logical address "L0-2" and a physical address "P2-2" are stored in association. Also in the address conversion table 20, a logical address "L0-3" and a physical address "P4-3" are stored in association. In the address conversion table 20, it is assumed that logical addresses and physical addresses are stored in association other than them.

Next, using FIG. 6, descriptions are given to information stored in the management information table 21. FIG. 6 illustrates one example of information stored in a management information table according to the first embodiment. As illustrated in FIG. 6, in the management information table 21, a physical block address, page validity, and a time stamp are stored in association.

Here, page validity is a bit string indicating whether or not the data stored in each physical page of a physical block indicated by the associated physical block address is valid data. For example, in a case that one physical block contains n physical pages, the management information table 21 defines a bit string of n bits as the page validity. The management information table 21 associates each physical page contained in a physical block with each bit of the page validity to define a bit associated with a physical page in which valid data is stored as "1". The management information table 21 also defines a bit associated with a physical page in which no valid data is stored as "0".

The time stamp is information indicating a clock time when the data is stored in a physical block indicated by the associated physical block address. For example, in the example illustrated in FIG. 6, in the management information table 21, a physical block address "P0", page validity "1101 ...", and a time stamp "10516" are stored in association. In other words, the management information table 21 indicates that, out of the physical pages contained in a physical block indicated by the physical block address "P0", the data stored in physical pages having physical page numbers of "0", "1", "3", and the like is valid data. The management information table 21 indicates that writing of data is carried out at a clock time of "10516" to a physical block indicated by the physical block address "P0".

Similarly, in the example illustrated in FIG. 6, in the management information table 21, a physical block address "P1", page validity "1010 ...", and a time stamp "912" are stored in association. In the management information table 21, a physical block address "P2", page validity "0001 ...", and a time stamp "1229" are stored in association. In the management information table 21, it is assumed that physical block addresses, page validity, and time stamps are stored in association other than them.

Back to FIG. 4, the requester interface unit 12 is an interface for a request from the CPUs 3a and 3b to the NAND devices 7a through 10a. For example, the requester interface unit 12 receives a readout request containing a logical address from the CPUs 3a and 3b via the I/O hub 4. In such a case, the requester interface unit 12 outputs the readout request to the request arbitration unit 13. When receiving the data read out of the NAND devices 7a through 10a from the request arbitration unit 13, the requester interface unit 12 also sends data to the CPUs 3a and 3b, which are issuers of the readout request.

The requester interface unit 12 also receives a writing request containing data to be written in the NAND devices 7a through 10a and a logical address of the data subject to the writing from the CPUs 3a and 3b. In such a case, the requester interface unit 12 outputs the received writing request to the request arbitration unit 13. When receiving a response that data writing is completed from the request arbitration unit 13, the requester interface unit 12 also sends a response to the CPUs 3a and 3b, which are issuers of the writing request.

The request arbitration unit 13 carries out arbitration for various requests issued by the requester interface unit 12, the test readout control unit 18, and the data movement control unit 19. In detail, the request arbitration unit 13 receives a readout request or a writing request received from the requester interface unit 12. The request arbitration unit 13 also receives a test readout request that requests test readout of data from the test readout control unit 18. The request arbitration unit 13 also receives a movement request that requests movement of data stored by the NAND devices 7a through 10a from the data movement control unit 19.

Then, the request arbitration unit 13 carries out arbitration for a readout request, a writing request, a test readout request, and a movement request received from the requester interface unit 12, the test readout control unit 18, and the data movement control unit 19. For example, the request arbitration unit 13 executes a readout request and a writing request issued by the requester interface unit 12 with the highest priority not to block readout and writing of data to the NAND devices 7a through 10a from the CPUs 3a and 3b. Rules to arbitrate each request by the request arbitration unit 13 are not limited to the process described above and any rule may be applied.

Next, descriptions are given to one example of process executed when the request arbitration unit 13 receives a readout request, a writing request, a test readout request, and a movement request. For example, when receiving a readout request, the request arbitration unit 13 outputs a logical address contained in the readout request to the table control unit 14. Then, when receiving a physical address subject to the readout from the table control unit 14, the request arbitration unit 13 issues a readout request having the received physical address stored therein to the device access control unit 15. After that, when receiving the data subject to the readout from the error detection unit 16, the request arbitration unit 13 outputs the received data to the requester interface unit 12. In contrast, in a case of receiving a notification of data readout failure from the error detection unit 16, the request arbitration unit 13 notifies the requester interface unit 12 of the data readout failure.

When receiving a writing request, the request arbitration unit 13 also outputs a logical address contained in the writing request to the table control unit 14. As a result, in a case that the data subject to writing is new data, the request arbitration unit 13 receives a physical address of a physical page to be the data writing destination out of the spare blocks in which no data is stored from the table control unit 14.

After that, the request arbitration unit 13 issues a writing request containing the physical address received from the table control unit 14 and the data subject to the writing to the device access control unit 15. The request arbitration unit 13 also outputs a table update request containing a physical address of a physical page to be the data writing destination and a logical address contained in the writing request to the table control unit 14.

In a case that the writing is intended to data update, the request arbitration unit 13 receives a physical address of a physical page in which update source data is stored as an update source physical address from the table control unit 14. The request arbitration unit 13 also receives a physical address of a physical page contained in a spare block, in other words, a physical address of a physical page to be a data writing destination as an update destination physical address from the table control unit 14.

Then, in a case of receiving an update source physical address and an update destination physical address from the table control unit 14, the request arbitration unit 13 issues an update request that requests data update to the device access control unit 15. In detail, the request arbitration unit 13 issues an update request containing an update source physical address, an update destination physical address, and the data to be written to the device access control unit 15.

The request arbitration unit 13 also outputs a table update request containing the update source physical address, the update destination physical address, and the logical address contained in the writing request to the table control unit 14. After that, when receiving a response that the writing of data is completed from the device access control unit 15, the request arbitration unit 13 outputs the received response to the requester interface unit 12.

The request arbitration unit 13 receives a test readout request containing a physical address of a physical page in which the data subject to the readout is stored from the test readout control unit 18. In such a case, the request arbitration unit 13 outputs the received test readout request to the device access control unit 15. When receiving a response that the test readout is carried out from the error detection unit 16, the request arbitration unit 13 also outputs a response to the test readout control unit 18.

The request arbitration unit 13 also receives a movement request containing a physical address of a physical page in which data subject to movement is stored from the data movement control unit 19. Hereinafter, a physical address in which the data subject to movement is stored is described as a movement source physical address. The request arbitration unit 13 also obtains a physical block address of a spare block, in other words, a physical address of a physical page to be a data movement destination by inquiring of the table control unit 14 and the like. Hereinafter, a physical address of a physical page to be a data movement destination is described as a movement destination physical address.

Then, the request arbitration unit 13 issues a movement request containing a movement source physical address and a movement destination physical address to the device access control unit 15. The request arbitration unit 13 also outputs a table update request containing a movement source physical address and a movement destination physical address to the table control unit 14. After that, when receiving a response that the data movement is completed from the device access control unit 15, the request arbitration unit 13 outputs a response that the data movement is completed to the data movement control unit 19.

The table control unit 14 converts a logical address to a physical address. For example, when receiving the logical address stored in the readout request from the request arbitration unit 13, the table control unit 14 obtains a physical address that is associated with the received logical address from the address conversion table 20. Then, the table control unit 14 outputs the physical address thus obtained to the request arbitration unit 13.

When receiving the logical address stored in the writing request from the request arbitration unit 13, the table control unit 14 also searches the address conversion table 20 for the physical address that is associated with the received logical address. Then, in a case that the physical address associated with the received logical address is not stored in the address conversion table 20, in other words, in a case that the data subject to writing is new data, the table control unit 14 executes the following process.

Firstly, the table control unit 14 searches for the physical block address associated with valid bits having each bit of the page validity of "0" with reference to the management information table 21 and obtains the physical block address thus detected as a physical block address of the spare block. Then, the table control unit 14 selects a physical page subject to writing of data from the physical page contained in the physical block address thus obtained and outputs the physical address indicating the selected physical page to the request arbitration unit 13.

In contrast, in a case that the physical address associated with the received logical address is stored in the address conversion table 20, in other words, in a case that the writing is intended to data update, the table control unit 14 executes the following process. Firstly, the table control unit 14 outputs the physical address that is associated with the received logical address as an update source physical address to the request arbitration unit 13.

The table control unit 14 also obtains a physical block address of the spare block with reference to the management information table 21 and selects a physical page to be the data writing destination from the physical block indicated by the physical block address of the spare block. Then, the table control unit 14 outputs the physical address indicating the selected physical page as the update destination physical address to the request arbitration unit 13.

When receiving a movement request from the request arbitration unit 13, the table control unit 14 also receives an inquiry about a physical address of the spare block from the request arbitration unit 13. In such a case, the table control unit 14 obtains a physical block address of the spare block with reference to the management information table 21 and selects a physical page to be the data writing destination from the physical block indicated by the physical block address of the spare block. Then, the table control unit 14 outputs a physical address indicating the selected physical page as the movement destination physical address to the request arbitration unit 13.

The table control unit 14 also carries out update of the address conversion table 20 and the management information table 21 depending on writing and movement of data. For example, in a case that the request arbitration unit 13 carries out writing of new data, the table control unit 14 receives a table update request containing a physical address of a physical page to be the data writing destination and a logical address contained in the writing request. In such a case, the table control unit 14 stores the logical address and the physical address contained in the table update request in association in the address conversion table 20.

The table control unit 14 also extracts a physical block address and a physical page number from the physical address contained in the table update request and identifies an entry in which the extracted physical block address is stored out of the entries in the management information table 21. Then, the table control unit 14 updates page validity corresponding to the extracted physical page number out of the page validity of the identified entry to "1". The table control unit 14 also stores a time stamp indicating the current clock time in the extracted entry.

In a case that the request arbitration unit 13 carries out data update, the table control unit 14 receives a table update request containing an update source physical address, an update destination physical address, and a logical address contained in a writing request. In such a case, the table control unit 14 identifies an entry in which the logical address contained in the table update request is stored from the address conversion table 20. Then, the table control unit 14 updates the physical address of the identified entry to the update destination physical address.

The table control unit 14 extracts an update source physical block address and an update source physical page number from the update source physical address and identifies an entry in which the extracted update source physical block address is stored from the management information table 21. Then, the table control unit 14 updates page validity corresponding to the extracted update source physical page number out of the page validity stored in the identified entry to "0".

The table control unit 14 also extracts an update destination physical block address and an update destination physical page number from the update destination physical address and identifies an entry in which the extracted update destination physical block address is stored from the management information table 21. Then, the table control unit 14 updates page validity corresponding to the extracted update destination physical page number out of the page validity stored in the identified entry to "1".

In a case that the request arbitration unit 13 carries out data movement, the table control unit 14 receives a table update request containing a movement source physical address and a movement destination physical address. In such a case, the table control unit 14 extracts an entry in which the movement source physical address is stored from the address conversion table 20. Then, the table control unit 14 updates the movement source physical address stored in the extracted entry to the movement destination physical address.

The table control unit 14 also extracts a movement source physical block address and a movement source physical page number from the movement source physical address and identifies an entry in which the extracted movement source physical block address is stored from the management information table 21. Then, the table control unit 14 updates page validity corresponding to the extracted movement source physical page number out of the page validity stored in the identified entry to "0".

The table control unit 14 also extracts a movement destination physical block address and a movement destination physical page number from the movement destination physical address and identifies an entry in which the extracted movement destination physical block address is stored from the management information table 21. Then, the table control unit 14 updates page validity corresponding to the extracted movement destination physical page number out of the page validity stored in the identified entry to "1".

The device access control unit 15 executes device access to the NAND devices 7a through 10a in accordance with various requests from the request arbitration unit 13. For example, the device access control unit 15 receives a readout request containing a physical address from the request arbitration unit 13. In such a case, the device access control unit 15 executes readout of the data stored in a physical page indicated by the physical address stored in the readout request out of the physical pages belonging to the NAND devices 7a through 10a. Then, the device access control unit 15 outputs the read data as data subject to readout together with the physical address contained in the readout request to the error detection unit 16.

In addition, for example, the device access control unit 15 receives a writing request containing a physical address and data subject to writing from the request arbitration unit 13. In such a case, the device access control unit 15 stores the data subject to writing in the physical page indicated by the physical address contained in the writing request. After that, the device access control unit 15 outputs a response that the writing of data is terminated to the request arbitration unit 13.

In addition, for example, the device access control unit 15 receives an update request containing an update source physical address, an update destination physical address, and data to be written from the request arbitration unit 13. In such a case, the device access control unit 15 reads out data in a physical page indicated by the update source physical address. Subsequently, the device access control unit 15 updates the read data to data contained in the update request.

Then, the device access control unit 15 stores the updated data in the physical page indicated by the update destination physical address. After that, the device access control unit 15 outputs a response that the writing of data is terminated to the request arbitration unit 13.

The device access control unit 15 also receives a movement request containing the movement source physical address and the movement destination physical address from the request arbitration unit 13. In such a case, the device access control unit 15 carries out readout of data from a physical page indicated by the movement source physical address. Then, the device access control unit 15 outputs the read data as data subject to movement to the error detection unit 16. Further, the device access control unit 15 stores data processed with error detection and correction that is returned from the error detection unit 16 in the physical page indicated by the movement destination physical address. After that, the device access control unit 15 outputs a response that the data movement is terminated to the request arbitration unit 13.

The device access control unit 15 also receives a test readout request containing a physical address from the request arbitration unit 13. In such a case, the device access control unit 15 executes readout of the data stored in a physical page indicated by the physical address stored in the test readout request out of the physical pages belonging to the NAND devices 7a through 10a. Then, the device access control unit 15 outputs the read data and the physical address contained in the test readout request as data subject to test readout to the error detection unit 16.

The error detection unit 16 carries out error detection from the data read out of the NAND devices 7a through 10a. For example, the error detection unit 16 receives data subject to readout and the physical address from the device access control unit 15. In such a case, the error detection unit 16 carries out error detection from the data subject to readout using, for example, an ECC bit added to the end of the data subject to readout. Then, in a case of not detecting an error from the data subject to readout, the error detection unit 16 outputs the data subject to readout to the request arbitration unit 13.

In contrast, in a case of detecting an error from the data subject to readout, the error detection unit 16 attempts error correction using the ECC bit. Then, in a case of correcting the error, the error detection unit 16 outputs data after correction to the request arbitration unit 13. In contrast, in a case of not being capable of correcting the error, the error detection unit 16 outputs a notification of data readout failure to the request arbitration unit 13.

In a case of detecting an error from the data subject to readout, the error detection unit 16 also executes the following process. Firstly, the error detection unit 16 notifies the data movement control unit 19 of a physical address of the physical page in which the data where the error is detected is stored. The error detection unit 16 also extracts a physical block address from the physical address of the physical page in which the data where the error is detected is stored. Then, the error detection unit 16 stores the physical block address in the error log storage unit 17.

In a case of receiving data subject to movement from the device access control unit 15, the error detection unit 16 also carries out error detection from the data subject to movement using an ECC bit added to the end of the data subject to movement. Then, in a case of not detecting an error, the error detection unit 16 returns the data without alteration to the device access control unit 15.

In contrast, in a case of detecting an error from the data subject to movement, the error detection unit 16 attempts error correction using the ECC bit. Then, in a case of correcting the error, the error detection unit 16 returns data after correction to the device access control unit 15. In contrast, in a case of not being capable of correcting the error, the error detection unit 16 returns the data without alteration to the device access control unit 15.

In a case of receiving data subject to test readout and a physical address from the device access control unit 15, the error detection unit 16 also executes the following process. Firstly, the error detection unit 16 carries out error detection from the data subject to test readout using an ECC bit added to the end of the data subject to test readout. Then, in a case of not detecting an error, the error detection unit 16 outputs a response that the test readout is carried out to the request arbitration unit 13. In contrast, in a case of detecting an error, the error detection unit 16 outputs the received physical address to the data movement control unit 19. After that, the error detection unit 16 outputs a response that the test readout is carried out to the request arbitration unit 13.

For example, in a case of detecting an error from the data subject to readout received together with a physical address "P0-1", the error detection unit 16 stores a physical block address "P0" in the error log storage unit 17 and outputs a physical address "P0-1" to the data movement control unit 19. In contrast, in a case of detecting an error from the data subject to test readout received together with the physical address "P0-1", the error detection unit 16 outputs the physical address "P0-1" to the data movement control unit 19.

The error log storage unit 17 stores information indicating a range where error occurrence is estimated. For example, the error log storage unit 17 stores a physical block address of a physical block containing the physical page in which the data where the error is detected is stored out of the read data as an error log.

The test readout control unit 18 executes test readout control that individually executes test readout of data to each physical page contained in the range where error occurrence is estimated. For example, the test readout control unit 18 obtains a physical block address stored in the error log storage unit 17 at certain time intervals or taking an instruction from an application program as an opportunity. The test readout control unit 18 also generates a physical address with a physical page number of a physical page located at the start of the physical block added to the physical block address thus obtained. Then, the test readout control unit 18 issues a test readout request containing the physical address thus generated to the request arbitration unit 13.

When receiving a response that the test readout is carried out from the request arbitration unit 13, the test readout control unit 18 also generates a physical address with the next physical page number added to the physical block address thus obtained. Then, the test readout control unit 18 issues a test readout request containing the physical address thus generated to the request arbitration unit 13. In other words, the test readout control unit 18 reads data individually out of each physical page of the physical block in which the data where the error is detected is stored.

In a case of issuing a test readout request to all physical pages of the physical block indicated by the physical block address thus obtained, the test readout control unit 18 also obtains a physical block address stored by the error log storage unit 17 next to the physical block address thus obtained. Then, the test readout control unit 18 issues a test readout request individually to all physical pages of the physical block indicated by the physical block address thus obtained.

For example, when a physical block address "P0" is obtained from the error log storage unit 17, the test readout control unit 18 issues a test readout request containing a physical address "P0-0" with a physical page number "0" added thereto. Then, in a case of receiving a response to the test readout request containing the physical address "P0-0", the test readout control unit 18 issues a test readout request containing a physical address "P0-1" with a physical page number "1" added thereto. Then, the test readout control unit 18 issues a test readout request individually to all physical pages indicated by the physical block address "P0", and after that, in a case of receiving a response, obtains a new physical block address from the error log storage unit 17.

The test readout control unit 18 may also issue a test readout request only to a physical page in which valid data is stored. For example, the test readout control unit 18 obtains an entry in which the physical block address thus obtained is stored out of each entry in the management information table 21 via the request arbitration unit 13 and the table control unit 14 and obtains page validity of the entry thus obtained. Then, the test readout control unit 18 may also issue a test readout request only to a physical page that is associated with a bit having a value of "1" out of each bit of the page validity thus obtained.

The data movement control unit 19 moves the data where the error is detected. For example, the data movement control unit 19 receives a physical address of the physical page in which the data where the error is detected is stored out of the data subject to the readout from the error detection unit 16. The data movement control unit 19 also receives a physical address of the physical page in which the data where the error is detected is stored out of the data subject to test readout from the error detection unit 16.

In such a case, the data movement control unit 19 generates a movement request containing the received physical address and outputs the movement request thus generated to the request arbitration unit 13. For example, in a case of receiving a physical address "P0-1" from the error detection unit 16, the data movement control unit 19 issues a movement request taking the physical address "P0-1" as the movement source physical address to the request arbitration unit 13. As a result, the NAND controller 6a executes data movement of the data where the error is detected out of the data subject to readout or where the error is detected out of the data subject to test readout.

The data movement control unit 19 may also execute wear leveling process and garbage collection process. For example, the data movement control unit 19 obtains each entry in the management information table 21 via the request arbitration unit 13 and the table control unit 14 at predetermined time intervals or taking an instruction of an application as an opportunity. Then, the data movement control unit 19 determines whether or not to move data of the entry thus obtained using the page validity and the time stamp stored in the entry thus obtained.

For example, in a case that a difference between the time stamp of the entry thus obtained and the current time stamp is greater than a predetermined threshold, the data movement control unit 19 may determine to move the data of the entry thus obtained. In a case that a number of bits having a value of "1" out of the bits contained in the page validity of the entry thus obtained is less than a predetermined threshold, the data movement control unit 19 may determine to move the data of the entry thus obtained. In a case that the difference between the time stamps is greater than a predetermined threshold and also a number of bits having a value of "1" is less than a predetermined threshold out of the bits contained in the page validity, the data movement control unit 19 may determine to move the data.

Then, in a case of determining to move the data of the entry thus obtained, the data movement control unit 19 generates a physical address of a physical page in which valid data is stored using the physical block address stored in the entry thus obtained and the page validity. Then, the data movement control unit 19 issues a movement request containing the physical address thus generated to the request arbitration unit 13.

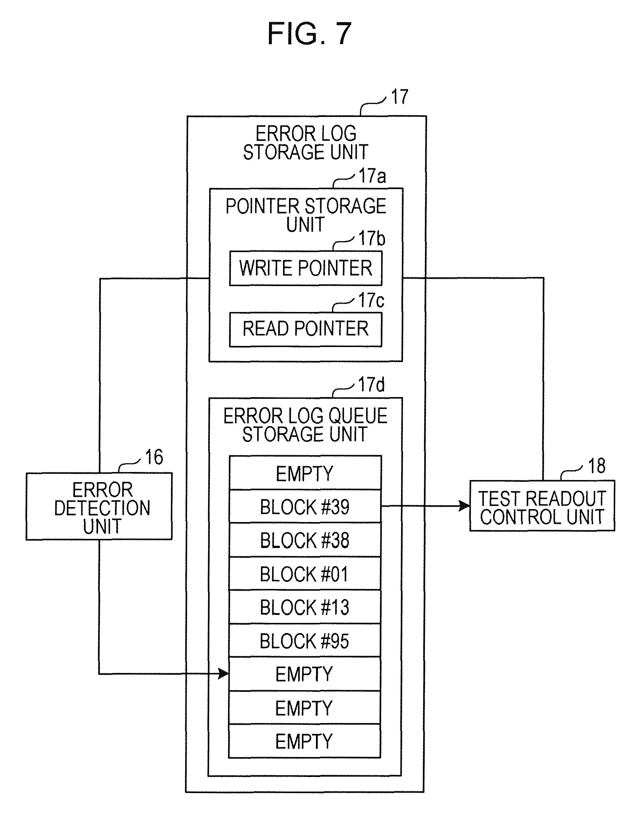

Next, using FIG. 7, descriptions are given to one example of a functional configuration of the error log storage unit 17. FIG. 7 illustrates one example of a functional configuration of an error log storage unit. In the example illustrated in FIG. 7, the error log storage unit 17 has a pointer storage unit 17a and an error log queue storage unit 17d. In the pointer storage unit 17a, a write pointer 17b and a read pointer 17c are stored.

The error log queue storage unit 17d is a ring buffer having a plurality of entries and stores a physical address of a physical block in which the data where the error is detected is stored in each entry. For example, in the example illustrated in FIG. 7, in an entry of the error log queue storage unit 17d, "Block #39", "Block #38", "Block #01", "Block #13", and "Block #95" are stored. The indication of "empty" in FIG. 7 indicates that no valid physical address block is stored in the entry.

The write pointer 17b is a value indicating an entry in which a new physical block address is stored out of each entry belonging to the error log queue storage unit 17d. The read pointer 17c is a value indicating an entry in which a physical block address subject to new test readout is stored out of each entry belonging to the error log queue storage unit 17d.

For example, in the example illustrated in FIG. 7, the error detection unit 16 identifies an entry to be a writing destination of a physical block address out of each entry belonging to the error log queue storage unit 17d with reference to the write pointer 17b stored by the pointer storage unit 17a. Then, the error detection unit 16 carries out writing of the physical block address in the identified entry and also increments a value of the write pointer 17b by one. In a case of incrementing a value of the write pointer 17b up to a predetermined value, the error detection unit 16 returns the value of the write pointer 17b to an initial value.

In the example illustrated in FIG. 7, the test readout control unit 18 identifies an entry subject to readout of the physical block address out of each entry belonging to the error log queue storage unit 17d with reference to the read pointer 17c stored by the pointer storage unit 17a. Then, the test readout control unit 18 reads the physical block address out of the identified entry and also increments a value of the read pointer 17c by one. In a case of incrementing a value of the read pointer 17c up to a predetermined value, the test readout control unit 18 returns the value of the read pointer 17c to an initial value.

In a case that a physical block address subject to test readout is stored in all entries of the error log queue storage unit 17d, the value of the write pointer 17b matches the value of the read pointer 17c. Therefore, as a result of incrementing the value of the write pointer 17b, in a case that the value of the write pointer 17b matches the value of the read pointer 17c, the error detection unit 16 stands by storage of a new physical block address.

In a case that the test readout control unit 18 carries out test readout up to the last entry, the value of the read pointer 17c matches the value of the write pointer 17b. Therefore, as a result of incrementing the value of the read pointer 17c, in a case that the value of the write pointer 17b matches the value of the read pointer 17c, the test readout control unit 18 stops issue of a test readout request.

For example, the requester interface unit 12, the request arbitration unit 13, the table control unit 14, the device access control unit 15, the error detection unit 16, the test readout control unit 18, and the data movement control unit 19 are electronic circuits. Here, as an example of such electronic circuit, an integrated circuit, such as an application specific integrated circuit (ASIC) and a field programmable gate array (FPGA), a central processing unit (CPU), a micro processing unit (MPU), or the like is applied.

The table storage unit 11, the error log storage unit 17, the pointer storage unit 17a, and the error log queue storage unit 17d are storage devices, such as a semiconductor memory element, like a random access memory (RAM) and a flash memory.

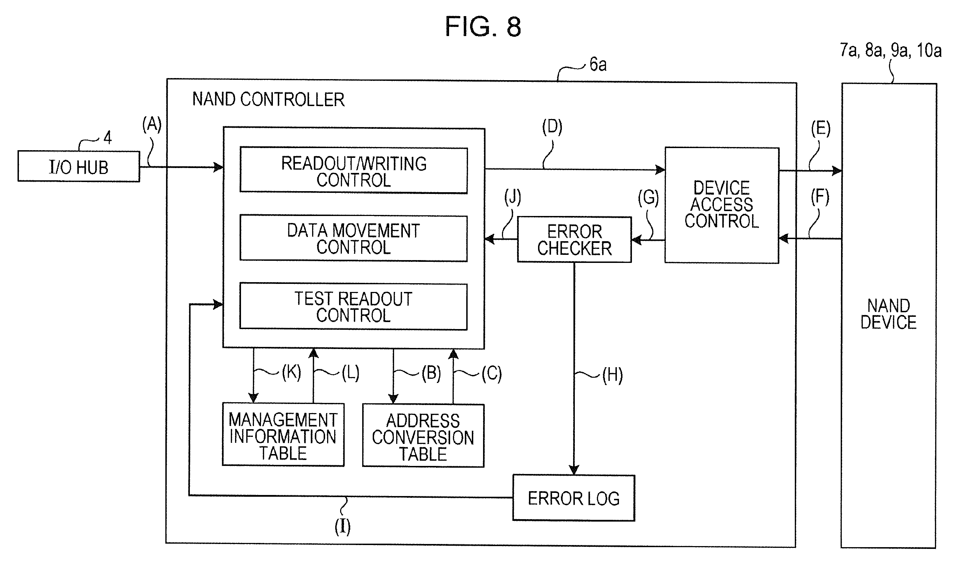

Next, using FIG. 8, descriptions are given to a flow of process executed by the NAND controller 6a. FIG. 8 illustrates process executed by an NAND controller. For example, as illustrated in (A) in FIG. 8, when receiving a readout request or a writing request via the I/O hub 4, the NAND controller 6a executes readout/writing control. For example, when receiving a readout request, as illustrated in (B) in FIG. 8, the NAND controller 6a executes address conversion between a logical address and a physical address with reference to the address conversion table 20.

Then, when obtaining the physical address with the converted address as illustrated in (C) in FIG. 8, the NAND controller 6a executes device access control as illustrated in (D) in FIG. 8. Then, the NAND controller 6a issues a readout request to the NAND devices 7a through 10a as illustrated in (E) in FIG. 8, and obtains data subject to readout as illustrated in (F) in FIG. 8. The NAND controller 6a executes error detection control as illustrated in (G) in FIG. 8 to carry out error detection and correction from the data subject to readout.

Here, in a case of detecting an error, as illustrated in (H) in FIG. 8, the NAND controller 6a stores a physical block address indicating a physical block in which the data where the error is detected is stored as an error log. In a case of executing test readout control, as illustrated in (I) in FIG. 8, the NAND controller 6a obtains a physical block address subject to test readout from the error log. Then, the NAND controller 6a executes a test readout request individually to each physical page of the physical block indicated by the physical block address thus obtained.

As illustrated in (J) in FIG. 8, as a result of issuing a test readout request, in a case of detecting an error from the read data, the NAND controller 6a executes data movement control. In detail, with reference to the management information table 21 as illustrated in (K) in FIG. 8, the NAND controller 6a obtains a physical address of a spare block as illustrated in (L) in FIG. 8.

Then, the NAND controller 6a moves the data where the error is detected to the physical page indicated by the physical address thus obtained. In such a manner, the NAND controller 6a defines each physical page contained in the physical block in which the data where the error is detected is stored individually as respective subject to test readout. Therefore, as a result of avoiding excessive data movement, the NAND controller 6a is capable of avoiding deterioration of the performances and the lives of the NAND devices 7a through 10a.

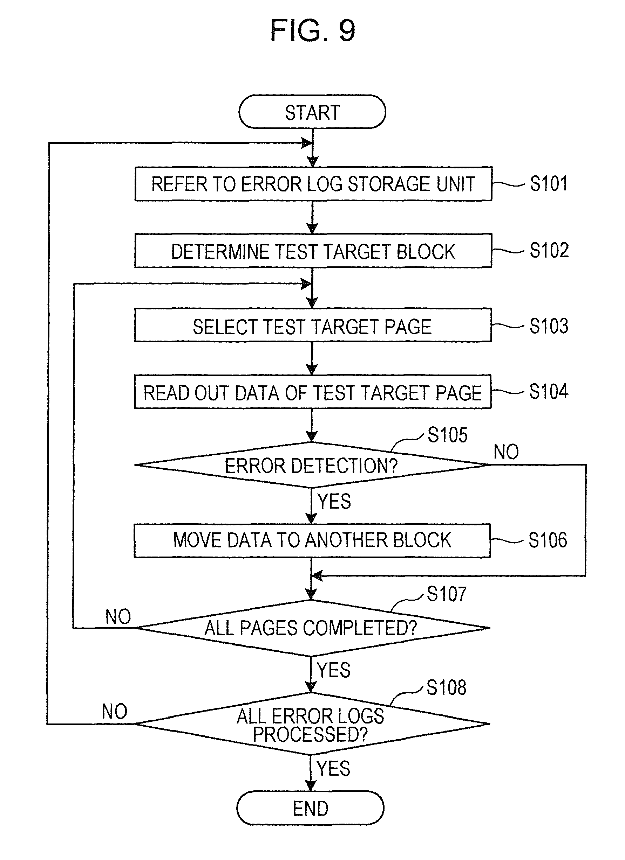

Next, using FIG. 9, descriptions are given to a flow of process executed by the NAND controller 6a. FIG. 9 is a flowchart illustrating a flow of process executed by an NAND controller according to the first embodiment. For example, the NAND controller 6a refers to the error log storage unit 17 (step S101). Then, the NAND controller 6a extracts one physical block address where test readout is not executed from the error log storage unit 17 to define the physical block indicated by the extracted physical block address as a test target block (step S102).

The NAND controller 6a selects one physical page contained in the test target block as a test target page (step S103). Then, the NAND controller 6a reads out data in the test target page (step S104) and determines whether or not an error is detected from the read data (step S105).

Here, in a case of detecting an error from the read data (yes in step S105), the NAND controller 6a moves the read data to another physical block (step S106). In contrast, in a case of not detecting an error from the read data (no in step S105), the NAND controller 6a skips step S106.

The NAND controller 6a determines whether readout of data is completed to all physical pages in the test target block (step S107). Then, in a case of not completing readout of data to all physical pages (no in step S107), the NAND controller 6a selects a physical page where readout is not executed as a test target page (step S103).

In contrast, in a case of completing readout of data to all physical pages (yes in step S107), the NAND controller 6a determines whether test readout has been executed to all error logs stored by the error log storage unit 17 (step S108). Then, in a case that test readout has been executed to all error logs (yes in step S108), the NAND controller 6a terminates the process. In contrast, in a case that test readout of all error logs is not executed (no in step S108), the NAND controller 6a executes step S101.

### [Effects of information processing device 1]

As described above, the information processing device 1 carries out error detection from the read data out of the NAND devices 7a through 10a. In a case of detecting an error from the read data, the information processing device 1 executes test readout of data individually from each physical page including the physical page in which the data where the error is detected is written and contained in a predetermined area where error occurrence is estimated. Then, as a result of carrying out test readout individually, in a case of detecting an error from the read data, the information processing device 1 moves the data where the error is detected to another physical page.

Therefore, the information processing device 1 is capable of avoiding excessive readout and writing process of data associated with the movement of the data where the error is detected. As a result, the information processing device 1 is capable of avoiding degradation in performances of the NAND devices 7a through 10a associated with the movement of the data where the error is detected. The information processing device 1 does not have to include hardware to exhibit a complex function in the NAND controllers 6a and 6b. For example, the NAND controller 6a may be provided with the error detection unit 16 to detect an error, the test readout control unit 18 to issue a test readout request individually to test target blocks, and the data movement control unit 19 to move data where an error is detected. Therefore, the information processing device 1 is capable of easily achieving test readout control and movement control with hardware.

Here, deletion of data is executed in physical block, so that element degradation is considered to proceed in physical block. As a result, it is considered that it is prone to produce an error in the physical block in which the data where the error is produced is stored. With that, in a case of detecting an error from the read data, the information processing device 1 identifies a physical block containing the physical page in which the data where the error is detected is written and executes test readout of data individually to each physical page contained in the identified physical block. As a result, the information processing device 1 is capable of avoiding error expansion due to a physical block with a degraded element.

As a result of test readout, the information processing device 1 moves the data where the error is detected to a physical block different from the original physical block. That is, the information processing device 1 moves data to a physical block other than the physical block considered to be prone to produce an error. Therefore, the information processing device 1 is capable of avoiding error expansion due to a physical page with a degraded element.

The information processing device 1 also stores a physical block address indicating the physical block in which the data where the error is detected is stored in the error log storage unit 17. Then, the information processing device 1 defines each physical page contained in the physical block indicated by the physical block address stored in the error log storage unit 17 as subject to test readout individually. Therefore, the information processing device 1 is capable of executing test readout and movement of data where the error is detected at any timing, for example, any timing such as a nighttime while there are less issues of a readout request and a writing request.

### [Second embodiment]

The NAND controller 6a described above determines whether or not to carry out test readout control for all physical block addresses stored by the error log storage unit 17. However, embodiments are not limited to this. For example, an NAND controller 6c according to a second embodiment may carry out test readout control only for a part of the physical block addresses stored by the error log storage unit 17 in single process.

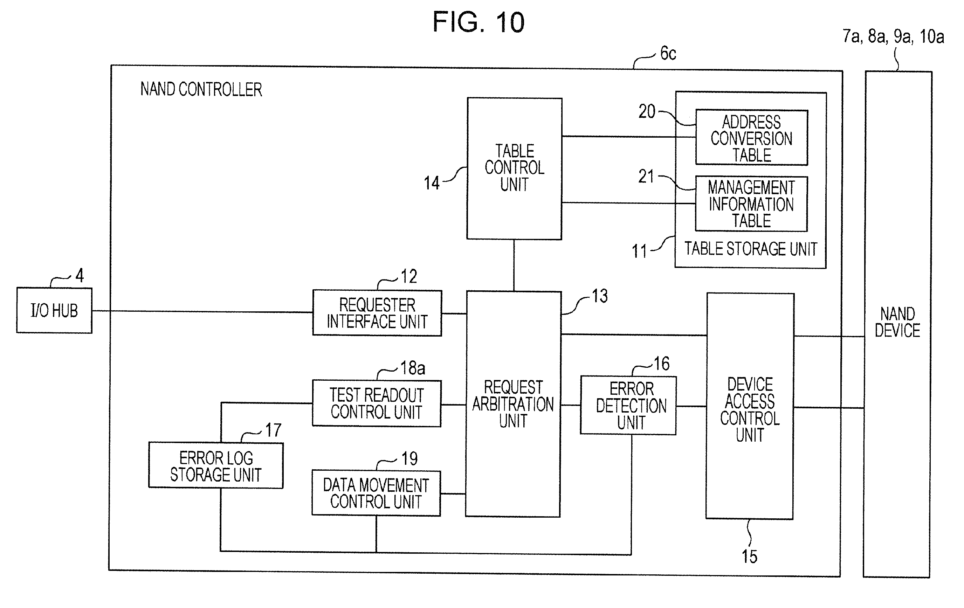

Descriptions are given below to process executed by the NAND controller 6c. Firstly, using FIG. 10, a functional configuration of the NAND controller 6c is described. FIG. 10 illustrates a functional configuration of an NAND controller according to the second embodiment. Among the functional configuration of the NAND controller 6c illustrated in FIG. 10, descriptions are omitted for functional configurations similar to the functional configuration of the NAND controller 6a illustrated in FIG. 4 by giving an identical character.

In the example illustrated in FIG. 10, the NAND controller 6c has a test readout control unit 18a. The test readout control unit 18a exhibits functions similar to those of the test readout control unit 18. The test readout control unit 18a also executes test readout control in order from the physical block address stored in the entry indicated by the read pointer 17c out of the physical block addresses stored by the error log storage unit 17. The test readout control unit 18a also terminates the test readout control in a case that a predetermined time lapses after starting the test readout control.

Then, after a lapse of a certain time period or taking an instruction from an application as an opportunity, the test readout control unit 18a restarts the test readout control and restarts the test readout control from the physical block address stored in the entry indicated by the read pointer 17c. In other words, the test readout control unit 18a restarts the test readout control from the physical block address stored by the error log storage unit 17 next to the physical block address subject to the test readout control lastly.

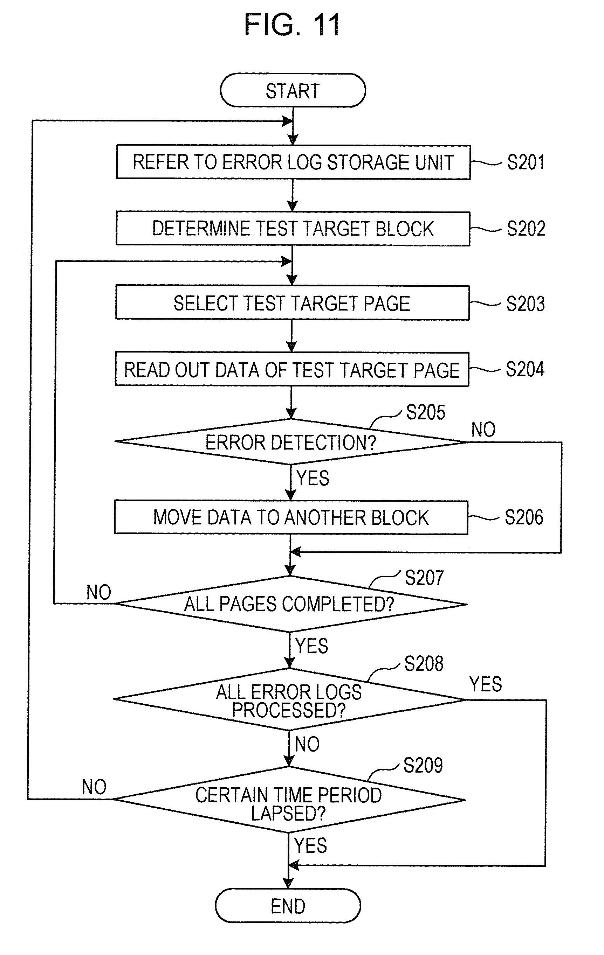

Descriptions are given below to a flow of process executed by the NAND controller 6c using FIG. 11. FIG. 11 is a flowchart illustrating a flow of process executed by an NAND controller according to the second embodiment. In the example illustrated in FIG. 11, an example that the NAND controller 6c separates a physical block subject to test readout control within a predetermined time period is described. Among the process illustrated in FIG. 11, descriptions are omitted for the process in step S201 through step S207 because it is similar to the process in step S101 through step S107 illustrated in FIG. 9.

For example, the NAND controller 6c determines whether test readout has been executed to all error logs stored by the error log storage unit 17 (step S208). Then, in a case that test readout has been executed to all error logs (yes in step S208), the NAND controller 6c terminates the process. In contrast, in a case that test readout is not executed to all error logs (no in step S208), the NAND controller 6c determines whether or not a predetermined time lapses after starting the test readout control (step S209).

Then, in a case that a predetermined time lapses after starting the test readout control (yes in step S209), the NAND controller 6c terminates the process. In contrast, in a case that a predetermined time does not lapse after starting the test readout control (no in step S209), the NAND controller 6c executes step S201.

The NAND controller 6c may also separate the test readout control, not to separate the test readout control within a predetermined time period, but in another method. For example, among the physical block addresses stored by the error log storage unit 17, in a case of executing test readout control for a predetermined number of physical block addresses, the test readout control unit 18a terminates the test readout control. Then, the test readout control unit 18a may also restart the test readout control after a lapse of a certain time period or taking an instruction from an application as an opportunity.

In a case of carrying out such process, in step S209 illustrated in FIG. 11, the NAND controller 6c may, not to determine whether or not a predetermined time lapses, but determine whether or not a predetermined number of physical block addresses are subject to the test readout control.

### [Effects of NAND controller 6c]

As described above, the NAND controller 6c executes test readout control sequentially to each physical block address stored in the error log storage unit 17. Here, in a case that a predetermined time lapses after starting test readout control, the NAND controller 6c terminates the test readout control. Then, when restarting the test readout control, the NAND controller 6c executes test readout control sequentially from the physical block address stored by the error log storage unit 17 next to the physical block address subject to the last test readout control.

Therefore, the NAND controller 6c is capable of shortening the processing time when executing test readout control. As a result, the NAND controller 6c is capable of achieving flexible scheduling, such as to execute test readout control during a nighttime, for example, while the information processing device 1 does not execute the process. The NAND controller 6c shortens the time period difficult to access the NAND devices 7a through 10a by the test readout control and the data movement control, so that it is capable of improving access performances to the NAND devices 7a through 10a.

In a case of executing test readout control to a predetermined number of physical block addresses out of each physical block address stored in the error log storage unit 17, the NAND controller 6c terminates the test readout control. Then, when restarting the test readout control, the NAND controller 6c executes the test readout control sequentially from the physical block address stored by the error log storage unit 17 next to the physical block address subject to the last test readout control.

Therefore, the NAND controller 6c is capable of shortening the processing time when executing test readout control and achieving flexible scheduling. The NAND controller 6c is also capable of improving access performances to the NAND devices 7a through 10a.

### [Third embodiment]

The NAND controllers 6a through 6c described above issue a test readout request individually to all physical pages contained in the physical block indicated by each physical block address stored by the error log storage unit 17. However, embodiments are not limited to them. For example, when issuing a test readout request individually to physical pages in a certain physical block, in a case that the frequency of detecting an error falls below a predetermined threshold, the NAND controllers 6a through 6c may cancel execution of test readout control.

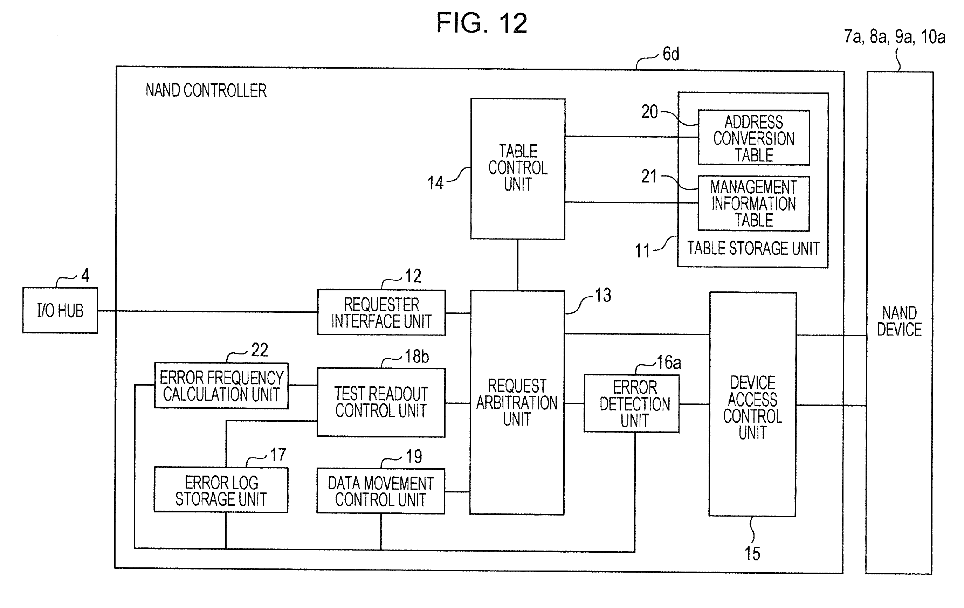

Descriptions are given below to an NAND controller 6d, as an NAND controller according to a third embodiment, to cancel execution of test readout control in a case that frequency of detecting an error falls below a predetermined threshold when issuing a test readout request individually. Firstly, using FIG. 12, a functional configuration of the NAND controller 6d is described. FIG. 12 illustrates a functional configuration of an NAND controller according to the third embodiment. Among the functional configuration of the NAND controller 6d illustrated in FIG. 12, descriptions are omitted for a functional configuration similar to the functional configuration of the NAND controller 6a illustrated in FIG. 4 by giving an identical character.

For example, the NAND controller 6d has an error detection unit 16a, a test readout control unit 18b, and an error frequency calculation unit 22. The error detection unit 16a exhibits functions similar to the error detection unit 16. In a case of detecting an error from data subject to test readout, the error detection unit 16a also notifies the error frequency calculation unit 22 of the error detection. In a case of not detecting an error from data subject to test readout, the error detection unit 16a also notifies the error frequency calculation unit 22 of no error detection.

The error frequency calculation unit 22 calculates frequency of error detection by the error detection unit 16a while test readout control is executed for a certain physical block. Then, in a case that the frequency thus calculated is not more than a predetermined threshold, the error frequency calculation unit 22 gives an instruction to the test readout control unit 18b to discontinue the test readout control and execute test readout control to a new physical block.

For example, the error frequency calculation unit 22 counts a number of notifications of no error detection received from the error detection unit 16a. Then, in a case that the counted number exceeds a predetermined threshold, the error frequency calculation unit 22 gives an instruction to the test readout control unit 18b to execute test readout control to a new physical block.

In another example, the error frequency calculation unit 22 counts a sum of the number of no error detection notifications and the number of error detection notifications, in other words, the number of physical pages to which test readout is conducted. Then, the error frequency calculation unit 22 divides the number of error detection notifications by a number of physical pages to which a test readout request is issued to calculate an error rate per single readout. After that, in a case that the error rate thus calculated falls below a predetermined threshold, the error frequency calculation unit 22 gives an instruction to the test readout control unit 18b to execute test readout control to a new physical block.

In a case of receiving a notification to execute test readout control to a new physical block from the test readout control unit 18b, the error frequency calculation unit 22 also resets the number of no error detection notifications and the number of error detection notifications. As a result, the error frequency calculation unit 22 is capable of calculating an error rate of data to which test readout is conducted from each physical page per physical block subject to test readout control.

Here, in the error frequency, in a case that a number of data items to which test readout is conducted is less, in other words, in a case that a number of samples is less, random errors increase. With that, the error frequency calculation unit 22 executes the following process. Firstly, the error frequency calculation unit 22 calculates the error frequency using the number of no error detection notifications and the number of error detection notifications.

The error frequency calculation unit 22 determines whether or not the number of physical pages to which test readout is conducted exceeds a predetermined number. Then, in a case that the number of physical pages to which test readout is conducted exceeds the predetermined number, the error frequency calculation unit 22 determines whether or not the calculated error frequency falls below a predetermined threshold.

Then, in a case that the number of physical pages to which test readout is conducted exceeds a predetermined number and also the calculated error frequency falls below a predetermined threshold, the error frequency calculation unit 22 gives an instruction to the test readout control unit 18b to execute test readout control to a new physical block. Therefore, as a result of reducing random errors in the error frequency, the error frequency calculation unit 22 is capable of cancelling undesired test readout control to a physical block where an error is detected occasionally.

Out of the process to be executed by the error frequency calculation unit 22, the process to determine whether or not the number of physical pages to which test readout is conducted exceeds a predetermined number may not be desired in all cases. For example, depending on implementation of the NAND controller 6a, performances of the NAND devices 7a through 10a, and the like, an example in which random errors in the error frequency do not increase much even with a small number of samples is also considered. In such a case, the error frequency calculation unit 22 does not have to determine whether or not the number of physical pages to which test readout is conducted exceeds a predetermined number.

The test readout control unit 18b exhibits functions similar to those of the test readout control unit 18 or the test readout control unit 18a. In a case of carrying out test readout control by reading a new physical block address out of the error log storage unit 17, the test readout control unit 18b also outputs a notification to execute test readout control to a new physical block to the error frequency calculation unit 22.

In a case of being given an instruction to execute test readout control to a new physical block from the error frequency calculation unit 22, the test readout control unit 18b also executes the following process. Firstly, the test readout control unit 18b discontinues the test readout control under execution and newly reads a physical block address out of the error log storage unit 17. Then, the test readout control unit 18b executes test readout process to the newly read physical block address.

In such a manner, in a case that the error frequency falls below a predetermined threshold during execution of test readout control to a certain physical block, the test readout control unit 18b discontinues the test readout control even in a case that a physical page to which a test readout request is not issued is remained. Then, the test readout control unit 18b executes test readout control to a new physical block. Therefore, the test readout control unit 18b is capable of cancelling test readout control to a physical block subject to the test readout control due to an occasionally produced error.

Here, there is a case that, as the test readout control unit 18b issues a test readout request individually to each physical page contained in a physical block subject to test readout control in the order of the physical page numbers, it becomes difficult to appropriately calculate error frequency when there is deviation in error distribution. For example, in a case that an error occurs in the data stored in physical pages having a physical page number in the latter half out of the physical blocks subject to test readout, as issuing a test readout request in the order of physical page number, the error frequency falls below a predetermined threshold before an error is detected. As a result, the test readout control unit 18b turns out to discontinue the test readout control although data with an error occurring in a physical block subject to test readout is stored.

With that, the test readout control unit 18b issues a test readout request in random order individually to physical pages to which test readout is not carried out of the each physical page contained in a physical block subject to the test readout control. For example, the test readout control unit 18b generates a physical address subject to issue of a test readout request by adding a random number having a number of digits same as that of the physical page number to the physical block address obtained from the error log storage unit 17. Then, the test readout control unit 18b issues a test readout request containing the physical address thus generated. As a result, the test readout control unit 18b is capable of having error frequency calculated appropriately even in a case that there is deviation in the error distribution, so that it is possible to carry out cancellation of wrong test readout control.

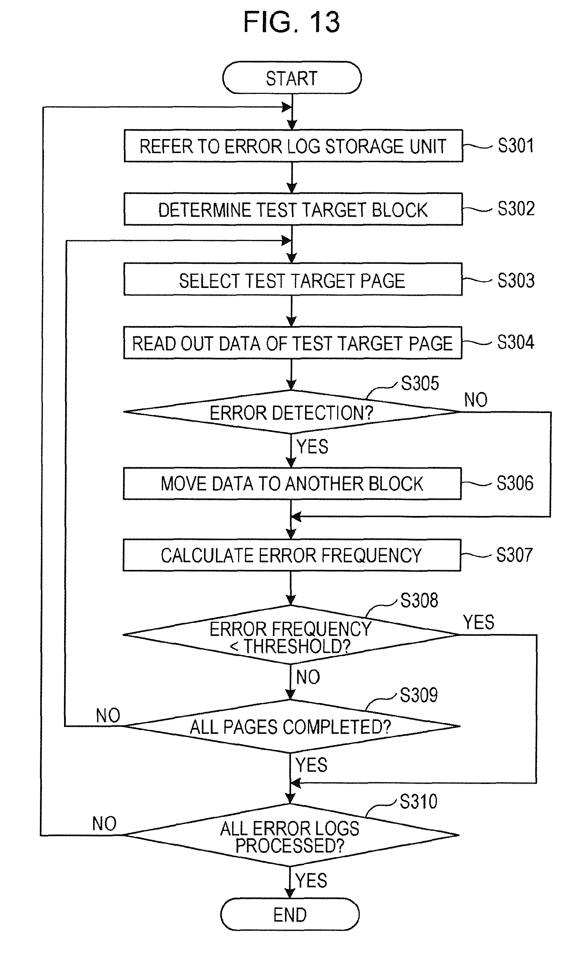

Next, using FIG. 13, descriptions are given to a flow of process executed by the NAND controller 6d. FIG. 13 is a flowchart illustrating a flow of process executed by an NAND controller according to the third embodiment. In FIG. 13, an example that the NAND controller 6d determines whether or not the error frequency exceeds a predetermined threshold, without determining whether or not the number of physical pages to which test readout is conducted exceeds a predetermined number, is described. Out of the process illustrated in FIG. 13, descriptions are omitted for process in steps S301 through S306, S309, and S310 because they are the process similar to steps S101 through S106, S107, and S108 illustrated in FIG. 9.

Firstly, when executing process in step S305 or process in step S306, the NAND controller 6d calculates error frequency in a test target block (step S307). Next, the NAND controller 6d determines whether or not the calculated error frequency is smaller than a predetermined threshold (step S308).

Then, in a case of determining that the calculated error frequency is not less than the predetermined threshold (no in step S308), the NAND controller 6d determines whether readout of data is completed for all physical pages in the test target block (step S309). In contrast, in a case of determining that the calculated error frequency is smaller than a predetermined threshold (yes in step S308), the NAND controller 6d skips process in step S309. Then, the NAND controller 6d determines whether test readout control is executed for all error logs stored by the error log storage unit 17 (step S310).

### [Effects of NAND controller 6d]

As described above, the NAND controller 6d calculates frequency of detecting an error from the data to which test readout is conducted per physical block. Then, in a case that the frequency thus calculated falls below a predetermined threshold, the NAND controller 6d discontinues the test readout control under execution to start test readout control to a new physical block. Therefore, the NAND controller 6d is capable of discontinuing the test readout control to a physical block subject to the test readout control due to an occasionally produced error when data is read out. As a result, the NAND controller 6d is capable of efficiently executing test readout control.

In a case that test readout of data is carried out from a predetermined number of physical pages out of each physical page in the physical block subject to test readout and also the error frequency is smaller than a predetermined threshold, the NAND controller 6d discontinues the test readout control to such physical block. Then, the NAND controller 6d starts test readout control to a new physical block. Therefore, as a result of reducing random errors in the error frequency, the NAND controller 6d is capable of appropriately determining skips in the test readout control to the physical block.

The NAND controller 6d executes test readout in random order from each physical page in the physical block subject to test readout. As a result, it is capable of appropriately calculating error frequency even in a case that there is deviation in error distribution, and as a result, the NAND controller 6d is capable of appropriately determining a skip of test readout control to the physical block.

### [Fourth embodiment]

While embodiments of the present disclosure have been described so far, embodiments may be carried out in various different modes other than the embodiments described above. With that, descriptions are given below to other embodiments contained in an embodiment of the present disclosure as a fourth embodiment.

### (1) Regarding granularity of data movement

The NAND controllers 6a through 6d described above determine whether or not to move data per physical page belonging to the NAND devices 7a through 10a. However, embodiments are not limited to this. In other words, the NAND controllers 6a through 6d are capable of determining whether or not to carry out data movement in optional unit. For example, the NAND controllers 6a through 6d may also carry out test readout control and movement control by collecting the data stored in a plurality of physical pages all together.

### (2) Regarding range of test readout control

When an error is detected from data subject to readout, the NAND controllers 6a through 6d described above define a physical block containing the physical page in which the data where the error is detected is stored as subject to the test readout control. However, embodiments are not limited to this. In other words, when an error is detected from data subject to readout, the NAND controllers 6a through 6d may define a physical page contained in any range estimated that an error is detected similarly, such as data deletion unit and physically close range, as subject to test readout.

For example, the NAND controllers 6a through 6d may also define a physical page physically close to the physical page in which the data where the error is detected is stored in the NAND devices 7a through 10a as subject to test readout control. The NAND controllers 6a through 6d may also define a unit to carry out deletion of data by the NAND devices 7a through 10a as subject to test readout control. The NAND controllers 6a through 6d may also define a range of granularity different from the granularity to carry out readout and writing of data by the NAND devices 7a through 10a as subject to test readout control.

Out of physical blocks adjacent to a physical block containing the physical page where the error occurs, the NAND controllers 6a through 6d may also define a physical page indicated by the physical page number identical to the physical page number of the physical page in which the error occurs as subject to test readout. For example, in a case of detecting an error from data in a physical page indicated by a physical address "P5-5", the NAND controllers 6a through 6d define each physical page in a physical block indicated by a physical block address "P5" as subject to the test readout control. Out of the physical pages contained in adjacent physical blocks, the NAND controllers 6a through 6d may also define physical pages indicated by physical addresses "P4-5" and "P6-5" having a physical page number that matches the physical address "P5-5" as subject to test readout control.

Out of the physical blocks containing the physical page in which the error occurs, the NAND controllers 6a through 6d may also define only a predetermined number of physical pages centered around the physical page in which the error occurs as subject to test readout. For example, in a case of detecting an error from data in a physical page indicated by a physical address "P5-5", the NAND controllers 6a through 6d may also define a range of physical addresses "P5-3" through "P5-7" as subject to test readout control.

(3) Regarding functional configuration of NAND controllers 6a through 6d

The functional configuration of the NAND controllers 6a through 6d described above is just one example, and it is possible to employ any configuration as long as it is possible to execute similar process as the NAND controllers 6a through 6d. For example, the NAND controller 6a may also have a control circuit that collects functions of the test readout control unit 18 and the data movement control unit 19.

The NAND controllers 6a through 6d are capable of executing test readout control and movement control even without being provided with the error log storage unit 17. That is, as long as test readout control is executed immediately when the error detection unit 16 detects an error, the NAND controllers 6a through 6d do not have to store an error log.

In the example described above, the process that the NAND controllers 6a through 6d determine movement of the data stored in the NAND devices 7a through 10a is described. However, embodiments are not limited to this. In other words, as long as data movement is carried out, the NAND controllers 6a through 6d may also operate as a storage medium to which any technique is applied, for example, a memory controller, such as a memory.

### (4) Regarding error storage unit

The error log storage unit 17 described above has, as exemplified in FIG. 7, the write pointer 17b, the read pointer 17c, and the error log queue storage unit 17d having a plurality of entries. However, embodiments are not limited to this. For example, the error log storage unit 17 may also store the physical block in which the data where the error is detected is stored in association with an error flag indicating the error detection.

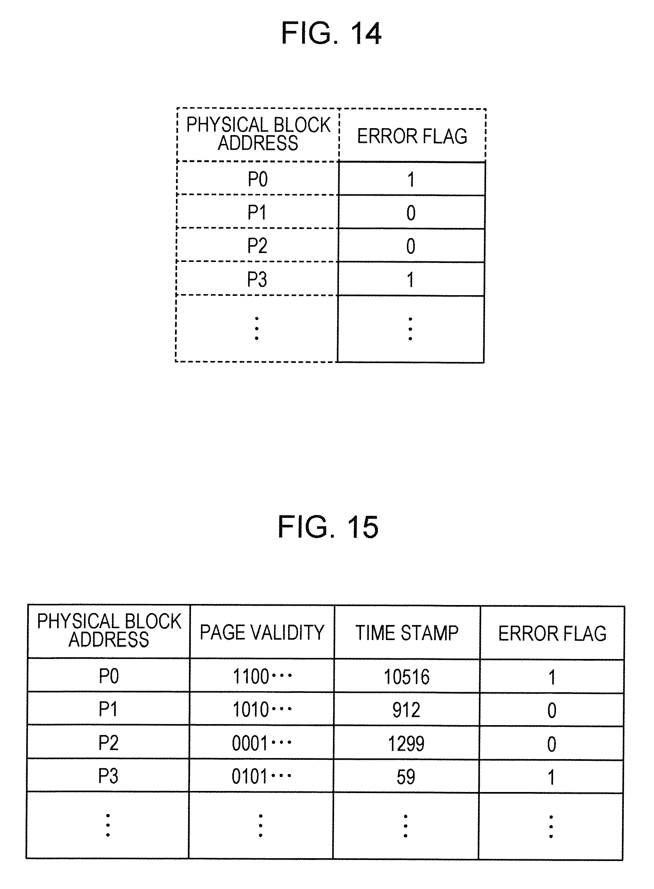

For example, FIG. 14 illustrates a variation of an error log storage unit. In the example illustrated in FIG. 14, the error log storage unit 17 has a plurality of entries associated with physical block addresses. The error log storage unit 17 also stores an error flag indicating the error detection in each entry.

For example, in the example illustrated in FIG. 14, an error flag "1" is stored in entries that are associated with physical block addresses "P0" and "P3", and an error flag "0" is stored in entries that are associated with physical block addresses "P1" and "P2". In such a case, the error log storage unit 17 indicates that the physical blocks indicated by the physical block addresses "P0" and "P3" are subject to test readout control and the physical block addresses indicated by the physical block addresses "P1" and "P2" are not subject to test readout control.

In a case that the error log storage unit 17 has an entry illustrated in FIG. 14, the error detection unit 16 and the test readout control unit 18 execute the following process. For example, when detecting an error from data subject to readout, the error detection unit 16 extracts a physical block address from the physical address of the physical page in which the data subject to readout is stored.

Then, the error detection unit 16 updates the error flag stored in an entry that is associated with the extracted physical block address, out of each entry in the error log storage unit 17, to "1". The test readout control unit 18 confirms an error flag stored in each entry of the error log storage unit 17 in order and defines the physical blocks indicated by the physical block address that is associated with the entries having an error flag of "1" as subject to the test readout control.

### (5) Regarding management information table

For example, the NAND controllers 6a through 6d may also put error logs stored by the error log storage unit 17 to be included in the management information table 21. For example, FIG. 15 illustrates one example of a management information table including an error log. In the example illustrated in FIG. 15, the management information table 21 stores a physical block address, page validity, a time stamp, and an error flag in association. Here, the error flag is information indicating whether or not an error is detected from data in a physical block indicated by the associated physical block address and information similar to the error flag illustrated in FIG. 14.

In a case that the management information table 21 stores the information illustrated in FIG. 15, the error detection unit 16 and the test readout control unit 18 execute the following process. For example, when detecting an error from data subject to readout, the error detection unit 16 extracts a physical block address from a physical address of the physical page in which the data subject to readout is stored. Then, the error detection unit 16 requests the table control unit 14 via the request arbitration unit 13 to update an error flag that is associated with the extracted physical block address to "1". As a result, the table control unit 14 updates the management information table 21 and associates a physical block address in the physical block in which the data where the error is detected is stored with the error flag "1".

Meanwhile, the test readout control unit 18 issues a request to browse information stored in the management information table 21 to the table control unit 14 per entry. Upon this, the table control unit 14 responds to the test readout control unit 18 with the information stored in the management information table 21 per entry. Then, in a case that an error flag of the received entry is "1", the test readout control unit 18 executes test readout control to the physical block indicated by the physical block address of the received entry. In contrast, in a case that an error flag of the received entry is "0" and in a case that the test readout control is finished, the test readout control unit 18 issues a request to browse information stored in the next entry to the table control unit 14.

In such a manner, in a case that an error log is stored in the management information table 21, the error log storage unit 17 is undesired by the NAND controllers 6a through 6d, so that it is possible to reduce the circuit scale.

### (6) Regarding request arbitration

The NAND controllers 6a through 6d described above execute a readout request and a writing request received from the I/O hub 4 with a priority. However, embodiments are not limited to this, and the NAND controllers 6a through 6d may also carry out arbitration for each request to level the life of each cell of the NAND devices 7a through 10a.

### (7) Regarding spare block

The NAND controllers 6a through 6d described above define a spare block in which no data is stored as a data movement destination. However, embodiments are not limited to this. For example, the NAND controllers 6a through 6d do not have to limit the data movement destination to a physical block different from the movement source. The NAND controllers 6a through 6d also identify a block with the longest life expectancy out of, for example, the physical pages in which no data is stored. Then, the NAND controllers 6a through 6d may also move data to the identified physical page. In a case of executing such process, the NAND controllers 6a through 6d are capable of using up the life by leveling degradation of a cell in each block belonging to the NAND devices 7a through 10a.

### (8) Program

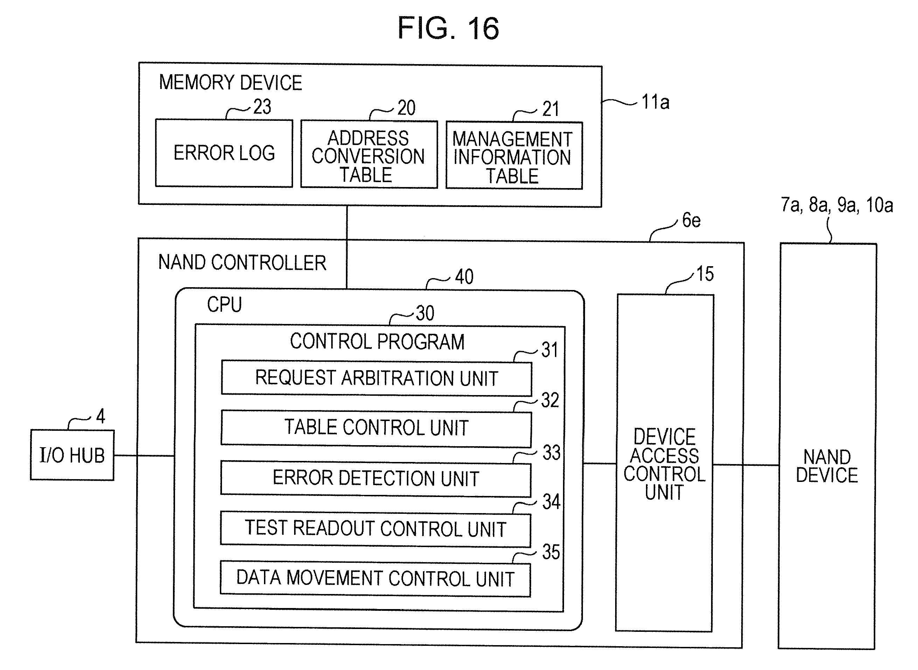

The functions exhibited by the NAND controllers 6a through 6d described in the above embodiments may also be achieved by executing a control program prepared in advance by an arithmetic processing unit in the NAND controllers. With that, in the descriptions below, using FIG. 16, one example of a computer that executes a control program having functions similar to those of the NAND controller 6a mentioned above is described.

FIG. 16 illustrates one example of an NAND controller that executes a control program. As illustrated in FIG. 16, an NAND controller 6e has a CPU 40 and a device access control unit 15. The CPU 40 is also connected to a memory device 11a. The memory device 11a may also be the memory built in the NAND controller 6e.

In the memory device 11a, an address conversion table 20, a management information table 21, and an error log 23 are stored in advance. Here, the CPU 40 reads out a control program 30 for expansion and execution, thereby causing the control program 30 to function as below. In other words, the control program 30 operates the CPU 40 as a request arbitration unit 31, a table control unit 32, an error detection unit 33, a test readout control unit 34, and a data movement control unit 35. Here, the control program 30 illustrated in FIG. 16 causes the CPU 40 to exhibit functions similar to those of the request arbitration unit 13, the table control unit 14, the error detection unit 16, the test readout control unit 18, and the data movement control unit 19 illustrated in FIG. 4.

The control program 30 mentioned above causes a physical block address of the physical block in which the data where the error is detected from the read data is stored to be stored in the CPU 40 as the error log 23 on the memory device 11a. Then, the control program 30 causes the CPU 40 to execute test readout control to each physical block indicated by the physical block address stored in the memory device 11a as the error log 23. The NAND controller 6e may also execute the control program 30 using, not a CPU, but an arithmetic device, such as an MPU and an FPGA, for example.

The control program 30 mentioned above may also be stored in, for example, the memory device 11a and the NAND devices 7a through 10a and may also be executed by the CPU 40 in another method. For example, each program is stored in a "portable physical medium", such as a flexible disk, a so-called FD, a compact disk (CD)-ROM, a digital versatile disk (DVD), a magnetoptical disk, and an IC card.

Then, the NAND controller 6e may also obtain each program from these portable physical media via each of the CPUs 3a and 3b for execution. In addition, each program stored in another computer, a server device, or the like may also be obtained via a public line, the internet, a LAN, a wide area network (WAN), and the like for execution.

## Claims

1. An information processing device comprising:
a storage device that has a plurality of storage areas;
a detection unit that carries out error detection from read data out of the storage area belonging to the storage device;
a readout unit that, in a case that the detection unit detects an error, identifies an area where error occurrence is estimated including a storage area in which the data where the error is detected is written and carries out readout of data individually from each storage area in the identified area; and
a movement unit that, in a case of detecting an error from the data read out by the readout unit, moves the data to another storage area.

2. The information processing device according to claim 1, wherein
the storage device deletes written data per block including the plurality of storage areas, and
the readout unit carries out readout of data from each storage area of a block including the storage area in which the data where the detection unit detects an error is written.

3. The information processing device according to claim 1 or 2, wherein the movement unit, in a case that the detection unit detects an error from the data read out by the readout unit, moves the data to a block other than a block including a storage area in which the data is stored.

4. The information processing device according to claim 2 or 3, further comprising:
a frequency calculation unit that calculates frequency of detecting an error from the data read out by the readout unit per block that the readout unit carries out readout of data; wherein
the readout unit, when carrying out readout of data from each storage area of the block including the storage area in which the data where the error is detected is written, in a case that the frequency to be calculated by the frequency calculation unit becomes smaller than a predetermined threshold, breaks process to read data out of a storage area contained in the block.

5. The information processing device according to claim 4, wherein
the readout unit, in a case that readout of data is carried out from a predetermined number of storage areas out of each storage area of the block including the storage area in which the data where the error is detected is written and also frequency that is calculated by the frequency calculation unit is smaller than a predetermined threshold, breaks process to read the data out of the storage area contained in the block.

6. The information processing device according to any one of claims 2 through 5, wherein
the readout unit carries out readout of data individually in random order from each storage area contained in the block.

7. The information processing device according to any one of claims 1 through 6, further comprising:
a storage unit that stores information including a storage area in which the data where the error is detected by the detection unit is written and indicating each storage area contained in the area where error occurrence is estimated; wherein
the readout unit carries out readout of data from a storage area indicated by the information stored by the storage unit.

8. The information processing device according to claim 7, wherein
the readout unit, in a case that a predetermined time lapses after starting process to carry out readout of data from the storage area indicated by the information stored by the storage unit, stops the process and identifies information stored by the storage unit next to information indicating each storage area in which readout is carried out lastly when restarting the process to start process to carry out readout of data individually from each storage area indicated by the identified information.

9. The information processing device according to claim 7, wherein
the readout unit, in a case of executing process to carry out readout of data from the storage area indicated by the information stored by the storage unit for a predetermined number of information items, stops the process and identifies information stored by the storage unit next to information indicating each storage area in which readout is carried out lastly when restarting the process to start process to carry out readout of data individually from each storage area indicated by the identified information.

10. A control circuit comprising:
a detection unit that carries out error detection from data read out of a storage device having a plurality of storage areas;
a readout unit that, in a case that the detection unit detects an error, identifies an area where error occurrence is estimated including a storage area in which the data where the error is detected is written and carries out readout of data individually from each storage area in the identified area; and
a movement unit that, in a case of detecting an error from the data read out by the readout unit, moves the data to another storage area.

11. A computer-readable recording medium having stored therein a control program for causing a computer to execute process comprising:
detecting an error from data read out of a storage device having a plurality of storage areas;
identifying, in a case that an error is detected from the data read out of the storage device, an area where error occurrence is estimated including a storage area in which data where the error is detected is written to read out data individually from each storage area in the identified area; and
moving, in a case of detecting an error from the read data, the data to another storage area.

12. A control method, causing an information processing device to execute process comprising:
detecting an error from data read out of a storage device having a plurality of storage areas;
identifying, in a case that an error is detected from the data read out of the storage device, an area where error occurrence is estimated including a storage area in which data where the error is detected is written to read out the data individually from each storage area in the identified area; and
moving, in a case of detecting an error from the read data, the data to another storage area.
